# EUROPEAN PATENT SPECIFICATION

(11) **EP 1 972 466 B1**
(45) Date of publication and mention of the grant of the patent: **21.04.2010**
(21) Application number: 08003573.6
(22) Date of filing: 27.02.2008
(51) Int. Cl.: B60C 1/00, C08K 3/34, C08K 9/04, C08L 9/06, C08L 21/00

(54) **Rubber composition for tires**
Kautschukzusammensetzung für Reifen
Composition de caoutchouc pour pneus

(30) Priority: 05.03.2007 KR 20070021644
(43) Date of publication of application: 24.09.2008
(73) Proprietor: Kumho Tire Co., Inc., Gwangsan-gu Gwangju 506-711 (KR)
(72) Inventor: Song, Han-Seok, Gwangsan-gu Gwangju 506-752 (KR)
(74) Representative: Becker Kurig Straus

(56) References cited:
- EP-A- 1 029 823
- EP-A- 1 364 987
- WO-A-02/100936
- WO-A-2005/118695
- WO-A-2007/011456
- DE-A1- 10 059 237
- KR-A- 20030 089 589
- US-A1- 2003 144 401
- US-A1- 2004 194 863
- US-A1- 2005 020 753
- US-A1- 2005 065 264

## Description

### BACKGROUND OF THE INVENTION

This application claims priority to Korean Patent Application No. 2007-0021644, filed on March 5, 2007, in the Korean Intellectual Property Office, the entire contents of which are hereby incorporated by reference.

### 1. Field of the Invention

The present invention relates to a rubber composition for tires, more particularly, to a rubber composition for tires which comprises polymer having reactive functional group (1) in a rubber raw material, and reactive layered silicate having reactive functional group (2) potentially reacting with the above polymer.

### 2. Description of the Related Art

Layered silicates have organic material inserted between layers of silicates or can be layer delaminated. The layered silicates show varied degrees of layer delamination based on chemical properties or processing conditions of rubber and/or polymer compounds, and kinds of materials inserted between layers thereof.

Dependent on degree of layer delamination of layered silicates in a rubber composition comprising the layered silicates, various properties including mechanical strength, tear strength, wear resistance and/or gas permeation resistance and the like can be improved.

A number of techniques and/or processes using layered silicates have been proposed to improve mechanical strength, flame retardance, gas permeation resistance, etc. and these technologies are continuously progressing to make improvements of various physical properties in related arts.

As one of conventionally known methods utilizing layered silicates, nano dispersion of layered silicate is induced by inserting cationic organic materials such as quaternary ammonium salts, imidazolium salts, and quaternary phosphates between layers by a variety of processes to increase affinity to rubber and/or polymer compounds. Layered silicate products containing cationic organic materials between layers are produced and commercially available by layered silicate manufacturers.

Rubber and/or polymer compositions comprising layered silicates are in general known in the prior art. In example, US 2005/0020753 A1 discloses a rubber composition comprising chemically modified layered silicates, which can be used for the manufacture of tires. Other examples of compositions comprising layered silicates for tires, or parts of them, are disclosed in EP 1 364 987, as well as in WO 2005/118695 and US 2004/0194863.

A nitrile rubber compound comprising a chemically modified nanoclay suitable for the manufacture of shaped bodies is disclosed in US 2005/0065264. In DE 100 59 237 a sealing comprising a vulcanizable rubber mixture with chemically modified layered silicates is disclosed.

In addition, nanocomposites of a polymer system containing a swellable, chemically modified clay are disclosed in US 2003/0144401, WO 02/100936, KR 2003 0089589 and EP 1 029 823. The later one teaches to employ guest molecules to be incorporated in an interlayer section of the clay mineral for expanding the structure.

A process for the preparation of nanocomposites is disclosed in example in WO 2007/011456.

Although layers of the layered silicate are partially delaminated by adding organically modified layered silicate (abbrev. to "organo-layered silicate") containing cationic organic compound, which is commercially available in markets, to a rubber composition and performing layer delamination of the layered silicate by a melt-admixing process, the layer delamination is restricted by kinds of rubber and/or polymer compounds, and layered silicates to be used.

### SUMMARY OF THE INVENTION

Accordingly, the present invention is directed to solve the problem of conventional proposes as described above and, an object of the present invention is to provide a rubber composition for tires which includes polymer having reactive functional group (1) in a rubber raw material, and reactive layered silicate prepared by inserting a material having reactive functional group (2) potentially reacting with the above polymer, between layers of the layered silicate so as to noticeably increase dispersion of the rubber raw material thereby improving tensile strength of un-vulcanized rubber, and so as to enhance dispersibility of the layered silicate thereby exhibiting excellent wear resistance, tear resistance, and air permeation resistance of the rubber composition.

In order to achieve the object described above, the present invention provides a rubber composition for tires.

More particularly, the rubber composition for tires of the present invention comprises polymer having reactive functional group (1) in a rubber raw material, and reactive layered silicate prepared by inserting a material having reactive functional group (2) potentially reacting with the above polymer, between layers or particles of the layered silicate.

According to the present invention the said polymer has at least one reactive functional group (1) selected from the group consisting of aryl halide, alkyl halide, hydroxyl group, benzyl halide, amine and phenol group, and the reactive functional group (2) of the material inserted between layers or particles of the layered silicate is at least one selected from the group consisting of aryl halide, alkyl halide, 1,3-propane sultone, hydroxyl group, benzyl halide, amine, tertiary phosphorous, carboxyl group, phenol group, maleic acid and maleic anhydride.

Preferably, the present inventive rubber composition for tires comprises polymer having the reactive functional group (1) in a rubber raw material, and 0.5 to 100 parts by weight ("wt. parts") of reactive layered silicate relative to 100wt. parts of the rubber raw material, which is prepared by inserting the material having the reactive functional group (2) potentially reacting with the above polymer, between layers or particles of the layered silicate.

With regard to the rubber composition for tires according to the present invention, the rubber raw material may comprise polymer having the reactive functional group (1) alone.

With regard to the rubber composition for tires according to the present invention, the rubber raw material may comprise polymer having the reactive functional group (1) in combination with general rubber. For 100wt. parts of the rubber raw material, the raw material includes 10 to 90wt. parts of polymer having the reactive functional group (1) in combination with 10 to 90wt. parts of general rubber.

Preferably, the general rubber includes at least one selected from the group consisting of natural rubber, general butyl rubber, epichlorohydrin rubber, nitrile rubber, hydrogenated nitrile rubber, styrene-butadiene rubber, urethane rubber, fluorinated rubber, silicon rubber, styrene-ethylene-butylene-styrene (SEBS) rubber, ethylene-propylene rubber, ethylene-propylene-diene (EPDM) rubber, butadiene rubber, hypalon, chloroprene, ethylene vinyl acetate rubber and acryl rubber.

Preferably, the rubber raw material and/or the polymer as one of ingredients contained in the rubber raw material, has the reactive functional group (1) at at least one site selected from main chain, side chain and terminal of the polymer, and
the amount of the reactive functional group (1) contained in the rubber raw material and/or in the polymer as one of ingredients in the rubber raw material is at least 0.01 (mole/kg of polymer).

Preferably, the amount of the reactive functional group (1) contained in the rubber raw material and/or in the polymer as one of ingredients in the rubber raw material ranges from 0.01 to 10 (mole/kg of polymer).

Among alkyl halide for the reactive functional group (1), alkyl group is any one selected from alkyl groups having 5 to 30 carbon atoms.

Examples of the rubber raw material and/or the polymer having the reactive functional group (1), as one of ingredients contained in the rubber raw material, include hydrin rubber, vinylbenzyl chloride styrene-butadiene rubber, chlorobutyl rubber, bromobutyl rubber.

The reactive layered silicate used in the rubber composition for tires according to the present invention may be prepared by the steps of: swelling, impregnating and/or mixing layered silicate with a material having the reactive functional group (2) which potentially reacts with the rubber raw material and/or the polymer having the reactive functional group (1), as one of ingredients in the rubber raw material, in relative ratio by weight ranging from 1:99 to 99:1; and inserting the material having the reactive functional group (2) potentially reacting with the polymer having the reactive functional group (1), between layers or particles of the layered silicate.

The reactive layered silicate may have a spacing between layers in the range of 0.1 to 10nm.

The reactive layered silicate may have a ratio of flat width (1) to thickness (d), called aspect ratio (1/d) of at least 5.

The reactive layered silicate may have an aspect ratio ranging from 5 to 900.

The reactive layered silicate may comprise natural layered silicate that can possibly undergo cationic exchange and/or anionic exchange reactions.

The reactive layered silicate may comprise synthetic layered silicate that can possibly undergo cationic exchange and/or anionic exchange reactions.

The reactive layered silicate may comprise organo-layered silicate which was organically modified by cationic group or anionic group containing materials.

The layered silicate can be any one selected from a group consisting of montmorillonite, saponite, hectorite, rectorite, vermiculite, mica, illite, talc, kolinite, hydrotalcite, sodium montmorillonite (Na-MMT) and Cloisite 15A.

Preferably, the layered silicate is montmorillonite.

The reactive functional group (2) which potentially reacts with the polymer having the reactive functional group (1) contained in the rubber raw material and which is inserted between layers or particles of the reactive layered silicate, may have molecular weight of not more than 5000.

The reactive functional group (2) which potentially reacts with the polymer having the reactive functional group (1) contained in the rubber raw material and which is inserted between layers or particles of the reactive layered silicate, may have molecular weight of not more than 1500.

The reactive functional group (2) which potentially reacts with the polymer having the reactive functional group (1) contained in the rubber raw material and which is inserted between layers or particles of the reactive layered silicate, may have molecular weight of not more than 400.

The reactive functional group (2) which is inserted between layers or particles of the reactive layered silicate, may have molecular weight ranging from 100 to 5000.

The reactive functional group (2) which is inserted between layers or particles of the reactive layered silicate, may be in liquid state.

If the reactive layered silicate is cation-exchangeable reactive layered silicate, a rubber composition with more excellent layer delamination can be obtained by chemically reacting the reactive layered silicate with a rubber raw material that contains polymer having the reactive functional group (1), to form cation containing materials between layers or particles of the layered silicate.

If the reactive layered silicate is anion-exchangeable reactive layered silicate, a rubber composition with more excellent layer delamination can be obtained by chemically reacting the layered silicate with a rubber raw material that contains polymer having the reactive functional group (1), to form anion containing materials between layers or particles of the layered silicate.

As a preferred embodiment of the present invention, a layered silicate product with more stable and excellent layer delamination can be produced by reacting the rubber raw material that contains the polymer having a reactive halogen compound, as the reactive functional group (1), with the reactive layered silicate that contains amine, as the reactive functional group (2) potentially reacting with the functional group (1) inserted between layers of the layered silicate, while melt-admixing the above materials to form cation containing salts as the final reaction material between the layers.

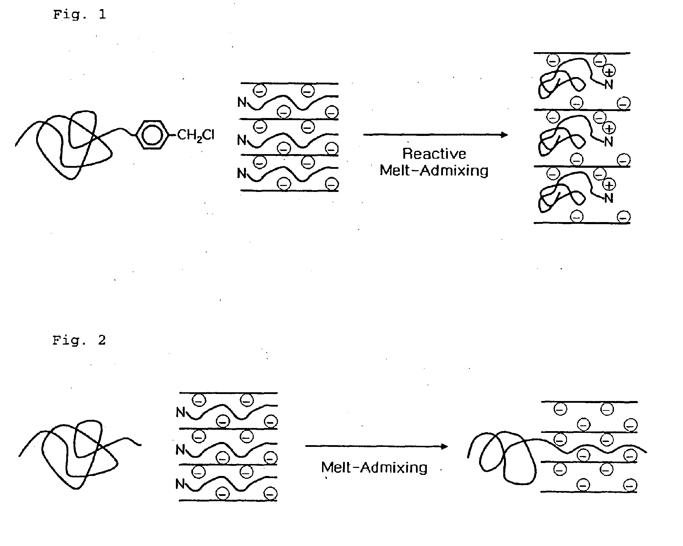

Fig. 1 is a flow chart illustrating conditions of reaction melt-admixing polymer having reactive functional group (1) with layered silicate containing amine as reactive functional group (2) inserted between layers of the layered silicate through impregnation. Fig. 2 is a flow chart illustrating conditions of melt-admixing general rubber with layered silicate. Comparison of Fig. 1 and Fig. 2 represents that the layered silicate product of the present invention shown in Fig. 1 has more superior layer delamination than that of the layered silicate product obtained by melt-admixing of general rubber with layered silicate shown in Fig. 2.

Another preferred embodiment of the present invention is the layered silicate product with more stable and excellent layer delamination formed by reacting the rubber raw material that contains the polymer having reactive amine and/or phosphorus as the reactive functional group (1) wherein only phosphorous is not according to the present invention with the reactive layered silicate that contains halogen compound as the reactive functional group (2) inserted between layers of the layered silicate while melt-admixing the above materials to form cation containing salts as the final reaction material between the layers of the layered silicate.

The rubber composition for tires of the present invention may further include at least one selected from the group consisting of carbon black, precipitated silica, silica aerosol, fumed silica, calcium carbonate, organic staple fibers and inorganic staple fibers, other than the reactive layered silicate.

Preferably, the rubber composition for tires of the present invention includes 10 to 80wt. parts of any one selected from a group consisting of carbon black, precipitated silica, silica aerosol, fumed silica, calcium carbonate, organic staple fibers and inorganic staple fibers relative to 100wt. parts of the rubber raw material, other than the reactive layered silicate.

A method of preparing a rubber composition for tires comprises melt-admixing a rubber raw material that contains polymer having the reactive functional group (1) and reactive layered silicate having the reactive functional group (2) inserted between layers of the layered silicate, which is potentially reacted with the reactive functional group (1), to allow chemical reaction of the rubber raw material with the reactive layered silicate, so as to delaminate layers of the layered silicate and disperse the silicate in the rubber composition.

The above preparation method further includes a process of forming a reactive layered silicate product that contains a material having the reactive functional group (2) inserted between layers or particles of the layered silicate, which swells, impregnates and/or mixes the material having the reactive functional group (2) with the layered silicate.

A preferred example of the reactive layered silicate product that contains the material having the reactive functional group (2), is a mixture of the reactive layered silicate and amine as the reactive functional group (2) in varied relative ratios by weight. The varied relative ratios by weight (abbrev. to "weight ratio") of amine to the reactive layered silicate ranges from 0.1:1 to 10:1 to form the reactive layered silicate mixture. Preferably, the weight ratio of amine to the reactive layered silicate ranges from 0.5:1 to 5:1. If the weight ratio of amine to the reactive layered silicate is less than 0.1, there are problems including: difficulties in preparation processes due to lower specific gravity of the layered silicate; and/or reduction of production efficiency of the layered silicate to cause insufficient performance thereof during introduction of the layered silicate into the rubber composition, so that the layered silicate is poorly dispersed and weakly reacted with rubber having reactive functional group. As a result, un-vulcanized rubber has reduced tensile strength after final mixing of the materials to cause rubber sheets to be broken or torn during processing. On the other hand, if the weight ratio of amine to the reactive layered silicate exceeds 10, manufacturing workability is decreased due to excess supply of amine and physical properties of the rubber composition are significantly reduced by amine residue.

After mixing amine with the layered silicate in the desired weight ratio, swelling, impregnation and/or mixing process needs a desired period of time to obtain the reactive layered silicate product with high production yield. The processing time possibly ranges from 1 to 72 hours and, more preferably, from 6 to 24 hours.

If the processing time is less than 1 hour, penetration of amine into the layered silicate is insufficient to improve dispersion and physical properties of a mixture of the layered silicate and amine. Whereas, for more than 72 hours, the dispersion and physical properties of the mixture are not remarkably enhanced, compared to the mixture processed for 24 hours.

Alternatively, the preparation method of the rubber composition for tires according to the present invention may comprise the steps of: melt-admixing a rubber raw material that contains polymer having the reactive functional group (1) with reactive layered silicate that contains a material having the reactive functional group (2) to allow chemical reaction thereof, wherein the functional group (1) can react with the functional group (2); using the reaction product as a master batch; and mixing the master batch with other additional ingredients typically used in manufacturing the rubber composition for tires.

The above melt-admixing process is normally performed by means of mixing roll, Banbury mixer and/or twinextruder and at desired temperature to flow or melt ingredients of the rubber composition.

Other than the rubber raw material and the reactive layered silicate described above, the rubber composition for tires of the present invention may optionally include additives such as reinforcement filler, anti-aging agent, activating agent, processing oil, vulcanizing agent and the like commonly used in the rubber composition in desired amounts, if necessary. However, the present invention does not include numerous specific details for general ingredients described above used in the rubber composition which are well known in the related arts and not essential for the present invention, in order to avoid unnecessarily obscuring the present invention.

The present invention provides a rubber comprising the rubber composition for tires of the present invention.

Furthermore, the present invention provides tire products comprising the rubber which includes the rubber composition for tires of the present invention.

The rubber including the rubber composition of the present invention can be used in manufacturing tire products, especially, any one selected from tread, side wall, inner liner, carcass and belt used for tires.

Such tire products comprising the rubber prepared with the rubber composition for tires of the present invention include, for example, any one selected from passenger car tire, truck tire, bus tire, motorcycle tire and air craft tire.

### BRIEF DESCRIPTION OF THE DRAWINGS

These and other objects, features, aspects, and advantages of preferred embodiments of the present invention will be more fully described in the following detailed description, taken in conjunction with the accompanying drawings. In the drawings:
Fig. 1 is a flow chart illustrating conditions of melt-admixing polymer having reactive functional group (1) with layered silicate that contains reactive amine inserted between layers of the layered silicate through impregnation;
Fig. 2 is a flow chart illustrating conditions of melt-admixing general rubber with layered silicate;
Fig. 3 is TEM photograph illustrating a rubber specimen prepared in Comparative Example 1; and
Fig. 4 is TEM photograph illustrating a rubber specimen prepared in Example 5.

### DETAILED DESCRIPTION OF THE INVENTION

Hereinafter, the present invention will become apparent from the following comparative examples, examples and experimental examples with reference to the accompanying drawings. However, these are intended to illustrate the invention as preferred embodiments of the present invention and do not limit the scope of the present invention.

### PREPARATION EXAMPLES 1 TO 9

Reactive layered silicate mixtures including layered silicate and amine as a material having the reactive functional group (2) were prepared under conditions for weight ratios and impregnation times as shown in Table 1.

Amine having the reactive functional group (2) contained in each of the mixtures was dimethylstearylamine, while the layered silicate was Cloisite 15A available from SCP Corp.

**TABLE 1: Conditions for preparation of reactive layered silicate mixture**

| Sorts | Preparation Ex. 1 | Preparation Ex. 2 | Preparation Ex. 3 | Preparation Ex. 4 | Preparation Ex. 5 | Preparation Ex. 6 | Preparation Ex. 7 | Preparation Ex. 8 | Preparation Ex. 9 |
|---|---|---|---|---|---|---|---|---|---|
| Weight of layered silicate | 1 | 1 | 1 | 1 | 1 | 1 | 1 | 1 | 1 |
| Weight of amine | 0.1 | 0.1 | 0.1 | 1 | 1 | 1 | 2 | 2 | 2 |
| Impreg nation time (hr) | 1 | 24 | 72 | 1 | 24 | 72 | 1 | 24 | 72 |

### EXAMPLES 1 TO 9

As listed in the following Table 2, polymer having reactive functional group (1) was used as a rubber raw material. 10wt. parts of each of the reactive layered silicate mixtures prepared as shown in the above Table 1, 15wt. parts of zinc stearate and 3wt. parts of zinc oxide (ZnO) were added to 100wt. parts of the rubber raw material in a Banbury mixer and blended at 130°C and 40rpm for 10 minutes to prepare a rubber mixture. Herein, ZnO and zinc stearate were added to the rubber raw material and mixed together for 1 minute, followed by addition of the layered silicate and admixing the mixture for 9 minutes.

In a mixing roll, 0.6wt. parts of sulfur and 0.7wt. parts of N-t-butylbenzothiazole sulfonamide (NS) were fed together with the prepared rubber mixture to obtain a sheet form product. The obtained sheet form product was subjected to vulcanization in a hot press at 160°C for 20 minutes after processing, resulting in a rubber specimen.

The rubber raw material used in each of these examples was a mixture of epichlorohydrin containing alkyl halide available from Zeon Corp. and Exxpro containing benzyl halide available from Exxon Mobile Corp. in weight ratio of 50 to 50.

### COMPARATIVE EXAMPLE 1

A rubber specimen was prepared in the same manner as in Example 1, except that 60wt. parts of carbon black N550 was added and 5wt. parts of Cloisite 15A available from SCP Corp. was used instead of the reactive layered silicate.

**TABLE 2: Compositions of rubber specimens prepared in Comparative Example 1 and Examples 1 to 9**

| Sorts | Comparative Ex. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Rubber raw material | 100 | 100 | 100 | 100 | 100 | 100 | 100 | 100 | 100 | 100 |
| Reactive laye red silicate | - | 5.5 (preparation Ex. 1) | 5.5 (preparation Ex. 2) | 5.5 (preparation Ex. 3) | 10 (preparation Ex. 4) | 10 (preparation Ex. 5) | 10 (preparation Ex. 6) | 15 (preparation Ex. 7) | 15 (preparation Ex. 8) | 15 (preparation Ex. 9) |
| Laye red silicate (Cloisite 15A) | 5 | - | - | - | - | - | - | - | - | - |
| Carbon black N-550 | 60 | - | - | - | - | - | - | - | - | - |
| Zinc stearate | 15 | 15 | 15 | 15 | 15 | 15 | 15 | 15 | 15 | 15 |
| ZnO | 3 | 3 | 3 | 3 | 3 | 3 | 3 | 3 | 3 | 3 |
| Sulfur | 0.6 | 0.6 | 0.6 | 0.6 | 0.6 | 0.6 | 0.6 | 0.6 | 0.6 | 0.6 |
| Vulcanizing agent (NS) | 0.7 | 0.7 | 0.7 | 0.7 | 0.7 | 0.7 | 0.7 | 0.7 | 0.7 | 0.7 |

### EXPERIMENTAL EXAMPLE 1

For the rubber specimens prepared in Comparative Example 1 and Examples 1 to 9, various properties including air permeation resistance, dispersibility, tensile strength of un-vulcanized rubber and wear resistance index were measured according to ASTM standards and the results are listed in the following Table 3.

**TABLE 3: Results obtained by Experimental Example 1 for specimens prepared in Comparative Example 1 and Examples 1 to 9**

| Items | Air permeation resistance index | Dispersibility | Tensile strength index of Unvulcanized rubber | Wear resistance index |
|---|---|---|---|---|
| Comparative Ex. 1 | 100 | × | 100 | 100 |
| Ex. 1 | 99 | × | 102 | 101 |
| Ex. 2 | 91 | × | 108 | 107 |
| Ex. 3 | 90 | × | 109 | 108 |
| Ex. 4 | 81 | × | 110 | 109 |
| Ex. 5 | 42 | ⓪ | 131 | 130 |
| Ex. 6 | 41 | ⓪ | 133 | 132 |
| Ex. 7 | 63 | ○ | 120 | 100 |
| Ex. 8 | 58 | ○ | 136 | 107 |
| Ex. 9 | 57 | ○ | 138 | 108 |

| | | | | |
|---|---|---|---|---|
| * Air permeation resistance index: represented by [air permeability measured in each of Examples 1 to 9/air permeability measured in Comparative Example 1] × 100, wherein air permeability measured in Comparative Example 1 is 9.21E - 18m4/sec.N and air permeation improves as the air permeation resistance index is decreased. * Wear resistance index shows each of wear resistance values of the rubber specimens prepared in Examples 1 to 9 relative to a wear resistance value of 100 for a specimen prepared in Comparative Example 1, and means that wear resistance is improved as the wear resistance index becomes higher. * Tensile strength index of un-vulcanized rubber shows each of tensile strength values of the un-vulcanized rubber specimens in Examples 1 to 9 relative to a tensile strength value of 100 for the un-vulcanized specimen in Comparative Example 1, and means that tensile strength of the un-vulcanized rubber is improved as the tensile strength index becomes higher. * standards of dispersibility are ×- poor; ○ - good; and ⓪ - very good. | | | | |

From results of Experimental Example 1, the material having the reactive functional group (2) and Cloisite 15A were admixed together in the most preferable weight ratio of 1:1 to prepare the reactive layered silicate. For Examples 7 to 9 in which weight ratio of the material having the reactive functional group (2) was relatively increased, dispersibility of the reactive layered silicate was a little increased but physical properties thereof were substantially not improved. In contrast, Examples 1 to 3 which used the material having the reactive functional group (2) with relatively reduced weight ratio, represented that neither of dispersibility nor physical properties of the reactive layered silicate were increased. Likewise, Examples 1, 4 and 7 which adopted impregnation for 1 hour showed no improvement of dispersibility and physical properties of the silicate. However, for Examples 2, 3, 5, 6, 8 and 9 with impregnation for 24 hours or more, it was demonstrated that both of dispersibility and physical properties of the reactive layered silicate were noticeably enhanced.

Tensile strength of un-vulcanized rubber was sufficiently increased by introduction of a material having the reactive functional group (2), that is, dimethylstearylamine in a desired amount.

Also, it was found that air permeation resistance was closely dependent on dispersibility of the reactive layered silicate.

### EXPERIMENTAL EXAMPLE 2

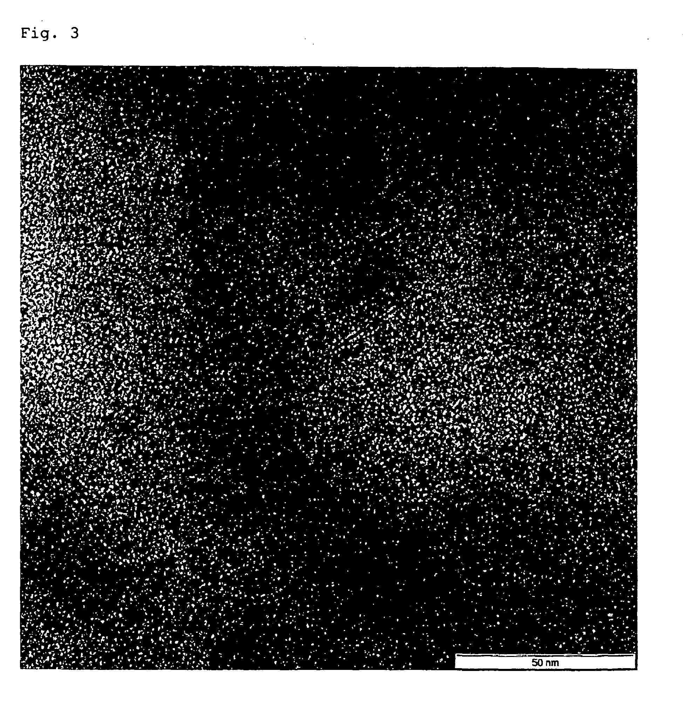

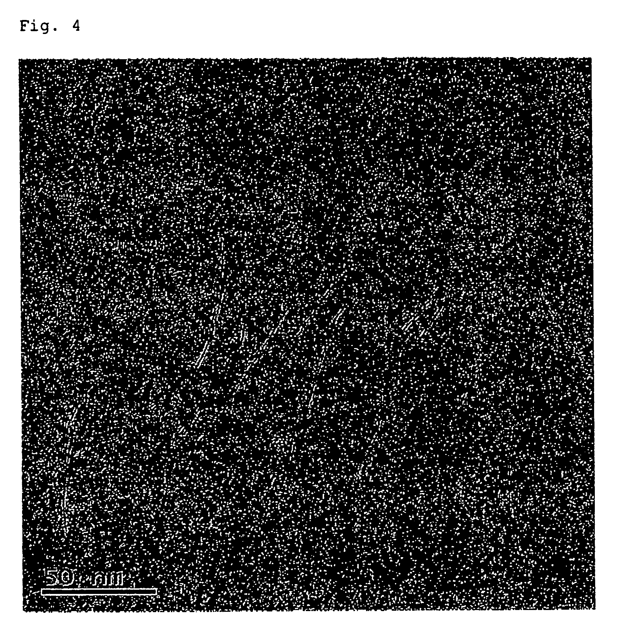

From TEM (transmission electron microscopy) photographs of specimens prepared in Comparative Example 1 and Examples 1 to 9, dispersibility of the layered silicate in each of the specimens was determined. Figs. 3 and 4 demonstrated results of Comparative Example 1 and Example 5, respectively.

In comparison of TEM photograph in Fig. 3 for the rubber specimen in Comparative Example 1 with TEM photograph in Fig. 4 for the rubber specimen in Example 5, it is obviously represented that the layered silicate shown in Fig. 4 has more favorable layer delamination and excellent dispersibility than those of the layered silicate shown in Fig. 3.

From results of the above Experimental Examples 1 and 2, the weight ratio of dimethylstearylamine as the reactant material to silicate 15A was 1:1 in the reactive layered silicate of the present invention. Examples 10 to 16 used the reactive layered silicate mixture prepared with impregnation for 24 hours.

### COMPARATIVE EXAMPLE 2

Polymer having reactive functional group (1) (often abbrev. to "reactive rubber") was used as a rubber raw material. 80wt. parts of carbon black N375, 1wt. part of silane coupling agent, 1wt. part of stearic acid, 5wt. parts of processing oil P#2, 5wt. parts of silica and 3wt. parts of ZnO were added to 100wt. parts of the rubber raw material in a Banbury mixer and blended at 130°C and 40rpm for 10 minutes to prepare a rubber mixture.

In a mixing roll, 1.7wt. parts of sulfur and 1.5wt. parts of vulcanizing agent (NS) were fed together with the prepared rubber mixture to obtain a sheet form product. The obtained sheet form product was subjected to vulcanization in a hot press at 160°C for 20 minutes after processing, resulting in a rubber specimen.

The reactive rubber used in this example was VBC_SBR containing vinylbenzyl chloride (VBC) available from Kumho Petrochemical Co. Ltd.

The following Table 4-1 shows constitutional ingredients of the specimen in Comparative Example 2.

### COMPARATIVE EXAMPLE 3

A rubber specimen was prepared in the same manner as in Comparative Example 2, except that 5wt. parts of Cloisite 15 available from SCP Corp. was further added to prepare the rubber mixture.

The following Table 4-1 shows constitutional ingredients of the specimen in Comparative Example 3.

### EXAMPLE 10

Polymer having reactive functional group (1) was used as a rubber raw material. 5wt. parts of reactive layered silicate, 80wt. parts of carbon black N375, 1wt. part of silane coupling agent, 1wt. part of stearic acid, 5wt. parts of processing oil P#2, 5wt. parts of silica and 3wt. parts of ZnO were added to 100wt. parts of the rubber raw material in a Banbury mixer and blended at 130°C and 40rpm for 10 minutes to prepare a rubber mixture.

In a mixing roll, 1.70wt. parts of sulfur and 1.50wt. parts of vulcanizing agent (NS) were fed together with the prepared rubber mixture to obtain a sheet form product. The obtained sheet form product was subjected to vulcanization in a hot press at 160°C for 20 minutes after processing, resulting in a rubber specimen.

The reactive rubber used in this example was VBC_SBR containing vinylbenzyl chloride (VBC) available from Kumho Petrochemical Co. Ltd.

The following Table 4-1 shows constitutional ingredients of the specimen in Example 10.

### EXAMPLE 11

A rubber specimen was prepared in the same manner as in Example 10, except that 7wt. parts of the reactive layered silicate was used to prepare the rubber mixture.

The following Table 4-1 shows constitutional ingredients of the specimen in Example 11.

### EXAMPLES 12

A rubber specimens was prepared in the same manner as in Example 10, except that 10wt. parts of the reactive layered silicates was used to prepare the rubber mixture.

The following Table 4-1 shows constitutional ingredients of the specimen in Example 12.

### EXAMPLES 13

A rubber specimens was prepared in the same manner as in Example 10, except that 15wt. parts of the reactive layered silicates was used to prepare the rubber mixture.

The following Table 4-2 shows constitutional ingredients of the specimen in Examples 13.

### EXAMPLES 14

A rubber specimens was prepared in the same manner as in Example 10, except that 20wt. parts of the reactive layered silicates was used to prepare the rubber mixture.

The following Table 4-2 shows constitutional ingredients of the specimen in Examples 14.

### EXAMPLES 15

A rubber specimens was prepared in the same manner as in Example 10, except that 30wt. parts of the reactive layered silicates was used to prepare the rubber mixture.

The following Table 4-2 shows constitutional ingredients of the specimen in Examples 15.

### EXAMPLE 16

A rubber specimen was prepared in the same manner as in Example 10, except that the rubber raw material was prepared by comprising 80wt. parts of polymer having reactive functional group (1) (that is, reactive rubber) and 20wt. parts of Butyl Rubber (Butyl 0268), and 100wt. parts of the rubber raw material, 10wt. parts of the reactive layered silicate and 1wt. part of DM were used to prepare the rubber mixture.

The following Table 4-2 shows constitutional ingredients of the specimen in Example 16.

**TABLE 4-1: Compositions of rubber specimens prepared by Comparative Examples 2 and 3, and Examples 10, 11 and 12**

| Sorts | Comparative Ex. 2 | Comparative Ex. 3 | Ex. 10 | Ex. 11 | Ex. 12 |
|---|---|---|---|---|---|
| Reactive rubber | 100 | 100 | 100 | 100 | 100 |
| General rubber | - | - | - | - | - |
| Cloisite 15A | - | 5 | - | - | - |
| Reactive layered silicate | - | - | 5 | 7 | 10 |
| Carbon black | 80 | 80 | 80 | 80 | 80 |
| Coupling agent | 1 | 1 | 1 | 1 | 1 |
| Stearic acid | 1 | 1 | 1 | 1 | 1 |
| DM | - | - | - | - | - |
| P#2 oil | 5 | 5 | 5 | 5 | 5 |
| Silica | 5 | 5 | 5 | 5 | 5 |
| Sulfur | 1.70 | 1.70 | 1.70 | 1.70 | 1.70 |
| NS | 1.50 | 1.50 | 1.50 | 1.50 | 1.50 |
| ZnO | 3.0 | 3.0 | 3.0 | 3.0 | 3.0 |
| GPT index | 100 | 100 | 75 | 74 | 52 |
| Dispersibil ity | ○ | × | ⓪ | ⓪ | ⓪ |
| Wear resistance | 100 | 92 | 115 | 110 | 105 |

| | | | | | |
|---|---|---|---|---|---|
| Reactive rubber: VBC_SBR available from Kumho Petrochemical Co. Ltd., which comprises 18.5% of styrene, 5% of VBC and 76.5% of butadiene; General rubber: Butyl 0268 available from Exxon Mobile; P# Oil: paraffin #2 oil; Carbon black: N375 available from KCB Corp.; Layered silicate: Cloisite 15A available from SCP Corp.; Reactive layered silicate: Cloisite 15A/dimethylstearylamine = 50/50 ratio by weight; Coupling agent: S1-69 available from Degussa Corp.; Stearic acid: product available from LG Chemical; DM: Vulkacit DM; Silica: Z-115, Rhodia; Sulfur: product available from Miwon Commercial Co. Ltd.; NS: Santocure NS; ZnO: KS-2 Special available from Hanil Chemical Ind. Co. Ltd. | | | | | |

**TABLE 4-2: Compositions of rubber specimens prepared by Examples 13 to 16**

| Sorts | Ex. 13 | Ex. 14 | Ex. 15 | Ex. 16 |
|---|---|---|---|---|
| Reactive rubber | 100 | 100 | 100 | 80 |
| General rubber | - | - | - | 20 |
| Cloisite 15A | - | - | - | - |
| Reactive layered silicate | 15 | 20 | 30 | 10 |
| Carbon black | 80 | 80 | 80 | 80 |
| Coupling agent | 1 | 1 | 1 | 1 |
| Stearic acid | 1 | 1 | 1 | 1 |
| DM | - | - | - | 1 |
| P#2 oil | 5 | 5 | 5 | 5 |
| Silica | 5 | 5 | 5 | 5 |
| Sulfur | 1.70 | 1.70 | 1.70 | 1.70 |
| NS | 1.50 | 1.50 | 1.50 | 1.50 |
| ZnO | 3.0 | 3.0 | 3.0 | 3.0 |
| GPT index | 65 | 45 | 10 | 41 |
| Dispersibility | ⓪ | ⓪ | ⓪ | ⓪ |
| Wear resistance | 105 | 110 | 110 | 90 |

| | | | | |
|---|---|---|---|---|
| Reactive rubber: VBC_SBR available from Kumho Petrochemical Co. Ltd., which comprises 18.5% of styrene, 5% of VBC and 76.5% of butadiene; General rubber: Butyl 0268 available from Exxon Mobile; P# Oil: paraffin #2 oil; Carbon black: N375 available from KCB Corp.; Layered silicate: Cloisite 15A available from SCP Corp.; Reactive layered silicate: Cloisite 15A/dimethylstearylamine = 50/50 ratio by weight; Coupling agent: S1-69 available from Degussa Corp.; Stearic acid: product available from LG Chemical; DM: Vulkacit DM; Silica: Z-115, Rhodia; Sulfur: product available from Miwon Commercial Co. Ltd.; NS: Santocure NS; ZnO: KS-2 Special available from Hanil Chemical Ind. Co. Ltd. | | | | |

### EXPERIMENTAL EXAMPLE 3

For the rubber specimens prepared in Comparative Examples 2 and 3, and Examples 10 to 16, various properties including air permeation resistance, dispersibility and wear resistance index were measured according to ASTM standards and the results are listed in the following Table 5.

Each of the rubber specimens has thickness of 0.2mm.

**TABLE 5: Physical properties of specimens prepared in Comparative Examples 2 and 3, and Examples 10 to 16**

| Items | Air permeation resistance index | Dispersibility | Wear strength resistance index | Tensile index of un-vulcanized rubber |
|---|---|---|---|---|
| Comparative Ex. 2 | 100 | ○ | 100 | 100 |
| Comparative Ex. 3 | 100 | × | 92 | 84 |
| Ex. 10 | 75 | ⓪ | 115 | 104 |
| Ex. 11 | 74 | ⓪ | 110 | 115 |
| Ex. 12 | 52 | ⓪ | 105 | 129 |
| Ex. 13 | 65 | ⓪ | 105 | 134 |
| Ex. 14 | 45 | ⓪ | 110 | 139 |
| Ex. 15 | 10 | ⓪ | 110 | 144 |
| Ex. 16 | 41 | ⓪ | 102 | 146 |

| | | | | |
|---|---|---|---|---|
| * Air permeation resistance index: represented by [air permeability measured in each of Comparative Example 3, Examples 10 to 16/air permeability measured in Comparative Example 2] × 100, wherein air permeability measured in Comparative Example 2 is 9.98E - 16m4/sec.N and air permeation improves as the air permeation resistance index is decreased. * Wear resistance index shows each of wear resistance values of the rubber specimens prepared in Comparative Example 3 and Examples 10 to 16 relative to a wear resistance value of 100 for a specimen prepared in Comparative Example 2, and means that wear resistance is improved as the wear resistance index becomes higher. * Tensile strength index of un-vulcanized rubber shows each of tensile strength values of the un-vulcanized rubber specimens in Comparative Example 3 and Examples 10 to 16 relative to a tensile strength value of 100 for the un-vulcanized rubber specimen in Comparative Example 2, and means that tensile strength of the un-vulcanized rubber is increased as the tensile strength index becomes higher. * standards of dispersibility are ×- poor; ○ - good; and ⓪ - very good. | | | | |

From results of Experimental Examples 1 to 3 described above, it is clearly understood that the rubber specimen comprising the rubber composition of the present invention has favorable dispersibility of layered silicate, wear resistance, air permeation resistance and tensile strength of un-vulcanized rubber compared to rubber specimens made of well known rubber compositions, thereby being efficiently used in manufacturing rubber products with excellent dispersibility, wear resistance, air permeation resistance and tensile strength of un-vulcanized rubber.

While the present invention has been described with reference to the preferred embodiments and examples, it will be understood by those skilled in the art that various modifications and variations may be made therein without departing from the scope of the present invention as defined by the appended claims.

## Claims

1. A rubber composition for tires, comprising polymer having reactive functional group (1) in a rubber raw material, and reactive layered silicate prepared by inserting a material having reactive functional group (2) potentially reacting with the above polymer, between layers or particles of the layered silicate,
wherein the polymer has at least one reactive functional group (1) selected from the group consisting of aryl halide, alkyl halide, hydroxyl group, benzyl halide, amine and phenol group, and
wherein the reactive functional group (2) of the material inserted between layers or particles of the layered silicate is at least one selected from the group consisting of aryl halide, alkyl halide, 1,3-propane sultone, hydroxyl group, benzyl halide, amine, tertiary phosphorous, carboxyl group, phenol group, maleic acid and maleic anhydride.

2. The rubber composition according to claim 1, wherein the composition comprises the polymer having reactive functional group (1) in a rubber raw material, and 0.5 to 100 parts by weight of the reactive layered silicate relative to 100 parts by weight of the rubber raw material, which is prepared by inserting the material having reactive functional group (2) potentially reacting with the above polymer, between layers or particles of the layered silicate.

3. The rubber composition according to any one of the preceding claims, wherein the rubber raw material includes 10 to 90 parts by weight of the polymer having reactive functional group (1) in combination with 10 to 90 parts by weight of general rubber, relative to total 100 parts by weight of the rubber raw material.

4. The rubber composition according to any one of the preceding claims, wherein the polymer has the reactive functional group (1) at at least one site selected from main chain, side chain and terminal of the polymer in an amount of more than 0.01 (mole/kg of polymer).

5. The rubber composition according to any one of the preceding claims, wherein the polymer having the reactive functional group (1) is at least one selected from the group consisting of hydrin rubber, vinylbenzyl chloride styrene-butadiene rubber, chlorobutyl rubber, bromobutyl rubber.

6. The rubber composition according to claim 3, wherein the general rubber is at least one selected from the group consisting of natural rubber, butyl rubber, epichlorohydrin rubber, nitrile rubber, hydrogenated nitrile rubber, styrene-butadiene rubber, urethane rubber, fluorinated rubber, silicon rubber, styrene-ethylene-butylene-styrene (SEBS) rubber, ethylene-propylene rubber, ethylene-propylene-diene (EPDM) rubber, butadiene rubber, hypalon, chloroprene, ethylene vinyl acetate rubber and acryl rubber.

7. The rubber composition according to any one of the preceding claims, wherein the reactive layered silicate is prepared by swelling, impregnating and/or mixing the reactive functional group (2) with the layered silicate in weight ratio of 1:99 to 99:1 to insert the reactive functional group (2) between layers or particles of the layered silicate.

8. The rubber composition according to any one of the preceding claims, wherein the reactive functional group (2) inserted between layers or particles of the reactive layered silicate has molecular weight ranging from 100 to 5000.

9. The rubber composition according to any one of the preceding claims, wherein the layered silicate has a spacing between layers in the range of 0.1 to 10 nm.

10. The rubber composition according to claim 1, further comprising at least one selected from the group consisting of carbon black, precipitated silica, silica aerosol, fumed silica or calcium carbonate filler, and organic or inorganic staple fibers.

## Patentansprüche

1. Kautschukzusammensetzung für Reifen, welche Polymer mit einer reaktiven funktionellen Gruppe (1) in einem Kautschukrohmaterial und reaktives Schichtsilikat umfasst, das durch Einbringen eines Materials mit einer reaktiven funktionellen Gruppe (2), das mit dem vorstehend genannten Polymer in Reaktion treten kann, zwischen Schichten oder Teilchen des Schichtsilikats hergestellt worden ist,
wobei das Polymer mindestens eine reaktive funktionelle Gruppe (1) aufweist, die ausgewählt ist, aus der Gruppe, bestehend aus Arylhalogenid, Alkylhalogenid, Hydroxylgruppe, Benzylhalogenid, Amin und Phenol-Gruppe, und
wobei die reaktive funktionelle Gruppe (2) des zwischen Schichten oder Teilchen des Schichtsilikats eingebrachten Materials mindestens eine ist, ausgewählt aus der Gruppe, bestehend aus Arylhalogenid, Alkylhalogenid, 1,3-Propansulton, Hydroxylgruppe, Benzylhalogenid, Amin, tertiäre Phosphorgruppe, Carboxylgruppe, Phenolgruppe, Maleinsäure und Maleinsäureanhydrid.

2. Kautschukzusammensetzung nach Anspruch 1, wobei die Zusammensetzung das Polymer mit der reaktiven funktionellen Gruppe (1) in einem Kautschukrohmaterial und 0,5 bis 100 Gewichtsanteile des reaktiven Schichtsilikats bezogen auf 100 Gewichtsanteile des Kautschukrohmaterials umfasst, welches durch Einbringen des Materials mit der reaktiven funktionellen Gruppe (2), das mit dem vorstehend genannten Polymer in Reaktion treten kann, zwischen Schichten oder Teilchen des Schichtsilikats, hergestellt worden ist.

3. Kautschukzusammensetzung nach einem der vorangehenden Ansprüche, wobei das Kautschukrohmaterial 10 bis 90 Gewichtsanteile des Polymers mit der reaktiven funktionellen Gruppe (1) in Verbindung mit 10 bis 90 Gewichtsanteilen eines üblichen Kautschuks bezogen auf insgesamt 100 Gewichtsanteile des Kautschukrohmaterials beinhaltet.

4. Kautschukzusammensetzung nach einem der vorangehenden Ansprüche, wobei das Polymer die reaktive funktionelle Gruppe (1) in einer Menge von mehr als 0,01 (mol/kg Polymer) an mindestens einer Stelle aufweist, die ausgewählt ist, aus Hauptkette, Seitenkette und Ende des Polymers.

5. Kautschukzusammensetzung nach einem der vorangehenden Ansprüche, wobei das Polymer mit der reaktiven funktionellen Gruppe (1) mindestens eines ist, ausgewählt aus der Gruppe, bestehend aus Hydrin-Kautschuk, Vinylbenzylchlorid-Styrol-Butadien-Kautschuk, Chlorbutyl-Kautschuk, Brombutyl-Kautschuk.

6. Kautschukzusammensetzung nach Anspruch 3, wobei der übliche Kautschuk mindestens einer ist, ausgewählt aus der Gruppe, bestehend aus natürlichem Kautschuk, Butyl-Kautschuk, Epichlorhydrin-Kautschuk, Nitril-Kautschuk, hydrierter Nitril-Kautschuk, Styrol-Butadien-Kautschuk, Urethan-Kautschuk, fluorierter Kautschuk, Silizium-Kautschuk, Styrol-Ethylen-Butylen-Styrol (SEBS)-Kautschuk, Ethylen-Propylen-Kautschuk, Ethylen-Propylen-Dien (EPDM)-Kautschuk, Butadien-Kautschuk, Hypalon, Chloropren, EthylenVinylacetat-Kautschuk und Acrylkautschuk.

7. Kautschukzusammensetzung nach einem der vorangehenden Ansprüche, wobei das reaktive Schichtsilikat hergestellt worden ist durch Quellen, Imprägnieren und/oder Mischen der reaktiven funktionellen Gruppe (2) mit dem Schichtsilikat in einem Gewichtsverhältnis von 1:99 bis 99:1, um die reaktive funktionelle Gruppe (2) zwischen Schichten oder Teilchen des Schichtsilikats einzubringen.

8. Kautschukzusammensetzung nach einem der vorangehenden Ansprüche, wobei die zwischen Schichten oder Teilchen des reaktiven Schichtsilikats eingebrachte reaktive funktionelle Gruppe (2) ein Molekulargewicht von 100 bis 5000 aufweist.

9. Kautschukzusammensetzung nach einem der vorangehenden Ansprüche, wobei das Schichtsilikat einen Schichtabstand im Bereich von 0,1 bis 10 nm aufweist.

10. Kautschukzusammensetzung nach Anspruch 1, ferner umfassend mindestens eines ausgewählt aus der Gruppe, bestehend aus Ruß, Fällungskieselsäure, Silikaaerosol, Kieselpuder oder Calciumcarbonat-Füllstoff und organische oder anorganische Stapelfasern.

## Revendications

1. Composition de caoutchouc pour pneus, comprenant un polymère ayant un groupement fonctionnel réactif (1) dans une matière première caoutchouteuse, et un silicate stratifié réactif, préparée en insérant une matière ayant un groupement fonctionnel réactif (2) réagissant potentiellement avec le polymère ci-dessus, entre les couches ou particules du silicate stratifié, dans laquelle le polymère a au moins un groupement fonctionnel réactif (1) choisi dans le groupe constitué par l'halogénure d'aryle, l'halogénure d'alkyle, le groupe hydroxyle, l'halogénure de benzyle, l'amine et le groupe phénol, et
dans laquelle le groupement fonctionnel réactif (2) de la matière insérée entre les couches ou particules du silicate stratifié est au moins un choisi dans le groupe constitué par l'halogénure d'aryle, l'halogénure d'alkyle, la 1,3-propanesultone, le groupe hydroxyle, l'halogénure de benzyle, l'amine, le phosphore tertiaire, le groupe carboxyle, le groupe phénol, l'acide maléique et l'anhydride maléique.

2. Composition de caoutchouc selon la revendication 1, laquelle composition comprend le polymère ayant le groupement fonctionnel réactif (1) dans une matière première caoutchouteuse, et 0,5 à 100 parties en poids du silicate stratifié réactif pour 100 parties en poids de la matière première caoutchouteuse, qui est préparée en insérant la matière ayant le groupement fonctionnel réactif (2) réagissant potentiellement avec le polymère ci-dessus, entre les couches ou particules du silicate stratifié.

3. Composition de caoutchouc selon l'une quelconque des revendications précédentes, dans laquelle la matière première caoutchouteuse comprend 10 à 90 parties en poids du polymère ayant le groupement fonctionnel réactif (1) en combinaison avec 10 à 90 parties en poids du caoutchouc général, pour un total de 100 parties en poids de la matière première caoutchouteuse.

4. Composition de caoutchouc selon l'une quelconque des revendications précédentes, dans laquelle le polymère a le groupement fonctionnel réactif (1) et au moins un site choisi parmi la chaîne principale, la chaîne latérale et le terminal du polymère dans une quantité de plus de 0,01 (mole/kg de polymère).

5. Composition de caoutchouc selon l'une quelconque des revendications précédentes, dans laquelle le polymère ayant le groupement fonctionnel réactif (1) est au moins un choisi dans le groupe constitué par le caoutchouc d'hydrine, le caoutchouc de styrène-butadiène de chlorure de vinylbenzyle, le caoutchouc de chlorobutyle et le caoutchouc de bromobutyle.

6. Composition de caoutchouc selon la revendication 3, dans laquelle le caoutchouc général est au moins un choisi dans le groupe constitué par le caoutchouc naturel, le caoutchouc de butyle, le caoutchouc d'épichlorhydrine, le caoutchouc de nitrile, le caoutchouc de nitrile hydrogéné, le caoutchouc de styrène-butadiène, le caoutchouc d'uréthane, le caoutchouc fluoré, le caoutchouc silicé, le caoutchouc de styrène-éthylène-butylène-styrène (SEBS), le caoutchouc d'éthylène-propylène, le caoutchouc d'éthylène-propylène-diène (EPDM), le caoutchouc de butadiène, l'hypalon, le chloroprène, le caoutchouc d'éthylène-acétate de vinyle et le caoutchouc d'acryle.

7. Composition de caoutchouc selon l'une quelconque des revendications précédentes, dans laquelle le silicate stratifié réactif est préparé par gonflement, imprégnation et/ou mélange du groupement fonctionnel réactif (2) avec le silicate stratifié dans un rapport en poids de 1:99 à 99:1 pour insérer le groupement fonctionnel réactif (2) entre les couches ou particules du silicate stratifié.

8. Composition de caoutchouc selon l'une quelconque des revendications précédentes, dans laquelle le groupement fonctionnel réactif (2) inséré entre les couches ou particules du silicate stratifié réactif a un poids moléculaire allant de 100 à 5 000.

9. Composition de caoutchouc selon l'une quelconque des revendications précédentes, dans laquelle le silicate stratifié a un espacement entre les couches allant de 0,1 à 10 nm.

10. Composition de caoutchouc selon la revendication 1, comprenant en outre au moins un choisi dans le groupe constitué par la charge de remplissage de type noir de charbon, silice précipitée, aérosilicagel, fumée de silice ou carbonate de calcium, et des fibres discontinues organiques ou inorganiques.
